# EUROPEAN PATENT APPLICATION

(11) **EP 1 969 927 A2**
(43) Date of publication of application: **17.09.2008**
(21) Application number: 07425589.4
(22) Date of filing: 25.09.2007
(51) Int. Cl.: A01M 7/00

(54) **Liquid sprayer for treating agricultural crops**

(30) Priority: 14.11.2006 IT RN20060021 U
(71) Applicant: Specialcavi S.R.L., 40011 Anzola dell'Emilia (BO) (IT)
(72) Inventor: Badiali, Raffaele, 48018 Faenza (Ravenna) (IT)
(74) Representative: Paolizzi, Marco

(57) **Abstract**

In a liquid sprayer (1) for treating agricultural crops, each mixer (4) of a plurality of mixers (4) mixes the active principle extracted from a respective container (3) of a plurality of containers (3) with the liquid pumped out of a single tank (2). The sprayer comprises: a plurality of liquid feed lines (8), independent of one another, each of which extends between a respective mixer (4) and at least one respective nozzle (7) and comprises a section (80) connecting the mixer (4) to the respective container (3); a suction unit (9) for taking in atmospheric air and a respective member (10) for distributing the air taken in and provided with a plurality of distribution heads (100) located at different positions and divided into assemblies (11) having at least one distribution head (100) each. The at least one nozzle (7) of each feed line (8) is coupled with a respective air distribution head (100). Two different feed lines (8) correspond to two different assemblies (11) of air distribution heads (100).

## Description

This invention relates to a liquid sprayer for treating agricultural crops.

The invention is suitable in particular for treating substantially arboreal crops such as fruit trees, grapevines and the like. It may, however, also be used for other types of crop. The treatments referred to may be treatments for the application of pesticides, fungicides, fertilizers and the like. The machine may also be used to apply weedkillers (even concurrently with other treatments).

Spraying machines are widely used in agriculture to apply liquids containing active principles (such as pesticides, weedkillers, fungicides, fertilizers or pharmaceutical products to be administered to crops).

The liquid may be sprayed in the form of a plain jet of liquid or in the form of a fast flow of nebulized or atomized liquid particles. In the latter case, the flow may be obtained either by pumping the liquid at high pressure to one or more nozzles (a process known as "mechanical pulverization"), or by subjecting the jet of liquid issuing from the nozzles (already totally or partly reduced to fine particles by the pressure of the liquid itself) to the action of a pressurized air flow (a process known as "pneumatic pulverization" or "combined pneumatic/mechanical pulverization", depending on circumstances).

The kinetic energy imparted to the liquid particles must be sufficient for them to reach the different parts of the crops to be treated.

Sprayers may be small and portable, designed to be carried over the shoulders, or they may be medium-to large-sized. In the latter case, they may be mounted on a tractor or drawn by a tractor.

This specification refers in particular to tractor-mounted and tractor-drawn sprayers. It will, however, be understood that the invention as described and claimed herein may be modified and adapted to suit portable, shoulder sprayers, too.

The active principle applied comes in the form of a concentrated liquid or a powder. In this form it can be stored for a long time without losing its efficacy.

Before the active principle can be applied to the crops, however, it must be dissolved in or mixed with a suitable carrier liquid (usually water). The solution or mixture of active principle and carrier liquid quickly loses its efficacy and must be used within a short time.

Traditionally, a sprayer comprises a tank for the liquid in which the active principle has been mixed or dissolved manually and a pump for feeding the liquid to the spray nozzles (the pump may be driven by an independent motor or by the tractor engine, for example by connecting it to the tractor's power take-off). If pulverization is also pneumatic, the sprayer also comprises a fan, usually a centrifugal fan (for example of the turbine type) to produce high-speed air flows. The fan takes in atmospheric air and sends it to an air distributor equipped with one or more air distribution heads with which one or more liquid emitting nozzles are associated. The nozzles are usually located inside the air flow issuing from the outlet of the distribution head.

The pump normally has a high capacity compared to that of the nozzles so that the excess liquid circulated can be used to mix the active principle inside the tank. For this purpose, downstream of the pump and upstream of the nozzle, relative to the liquid flow, there is a pressure relief regulator coupled with a line for recirculating the liquid in the tank.

In traditional sprayers, the liquid to be sprayed, containing the active principle, is prepared manually in the tank itself. Usually, the tank is filled with the carrier liquid and the active principle is added manually. The active principle may be a concentrated liquid or a concentrated pre-mixture of powder and carrier liquid prepared beforehand, again manually. The preparation is then mixed inside the tank using any suitable, rudimentary tool.

Since the active principle quickly loses its efficacy, the liquid preparation must be applied to the crops within a short time. If too much is prepared, the problem arises as to how to dispose of the excess preparation remaining in the tank since it cannot be re-used at a later time because the active principle soon becomes ineffective: many active principles used are toxic and/or sources of pollution and cannot therefore be disposed of in the environment because they contaminate the soil and pollute water courses (in fact, disposal of products of this kind is governed by stringent environmental protection legislation which requires proper, though expensive, disposal by appropriate means).

Furthermore, once empty, the tank and the spraying system must be cleaned. Cleaning is normally done by filling the tank with clean water and pumping it out through the nozzles in such a way as to flush the spraying system. Owing to the large size of the tank and spraying system, this leads to extremely high water consumption. Moreover, the problem remains of where to dispose of the contaminated liquid discharged by the spray nozzles.

With traditional sprayers, therefore, much of the spray product and active principle is easily wasted, with all the problems of high costs, pollution, contamination and wasted time that this involves.

One type of sprayer is known where, downstream of the carrier liquid tank and of the feed pump in the direction of liquid flow towards the nozzles, the fluid feed line includes a branch fitted with a suction and mixing device. The suction and mixing device sucks an active principle (in the form of a concentrated liquid or a concentrated pre-mixture of powder and carrier liquid) from an auxiliary container and mixes it with the clean carrier liquid from the tank. Once the carrier liquid has been charged with the active principle, it is pumped through the remaining part of the feed line to the nozzles.

This type of system means the active principle need not be mixed in the tank and makes it possible to save active principle and to reduce the problems connected with its disposal after treating the crops. Further, if the active principle is a concentrated liquid, its effective life after the container has been opened is much longer than it would be if the same active principle were diluted in the tank, thus allowing the quantity remaining in the auxiliary container to be used even after a relatively long time.

This solution, however, still has one disadvantage in common with the traditional solution described earlier: which is that only one type of treatment can be carried out at a time and it is not possible to apply different treatments to the crop or different parts of the crop simultaneously.

The aim of this invention is to overcome the above mentioned disadvantages by providing a liquid sprayer for treating agricultural crops that can be used to simultaneously apply multiple treatments even to different parts of the crop.

Another aim of the invention is to provide a liquid sprayer for treating agricultural crops that permits high efficiency and versatility in spraying parts of a crop located in different areas and/or at different heights, even with different active principles.

Yet another aim of the invention is to provide a liquid sprayer for treating agricultural crops that reduces problems connected with pollution, contamination and disposal of contaminants and/or pollutants.

A yet further aim of the invention is to provide a liquid sprayer for treating agricultural crops which has a spraying system that is easy to clean and thus reduces water wastage.

These aims and others, which shall become more apparent in the description that follows, are achieved, in accordance with the invention, by a liquid sprayer for treating agricultural crops having the structural and functional characteristics defined in the accompanying independent claims, while other embodiments of the sprayer according to the invention are described in the dependent claims.

The invention is described in more detail below, with reference to the accompanying drawings, which illustrate a preferred non-limiting embodiment of it.
- Figure 1 is a schematic diagram of the sprayer according to the invention, showing in particular the liquid lines and schematically illustrating the suction unit and the related air distribution member.
- Figure 2 is a front view, partly in cross section and with some parts cut away in order to better illustrate others, of an embodiment of the suction unit and related air distribution member of the sprayer according to the invention (in particular without the nozzles and liquid feed line system).
- Figure 3 is a side view (partly in cross section and with some parts cut away in order to better illustrate others), of the parts illustrated in Figure 2, showing in particular the nozzles coupled with the air distribution heads and part of the liquid feed lines.
- Figure 4 is a front view, partly in cross section and with some parts cut away in order to better illustrate others, of another embodiment of the suction unit and related air distribution member of the sprayer according to the invention (in particular without the nozzles, the liquid feed line system and the air distribution heads).
- Figure 5 is a cross section of an air distribution head with one of the nozzles coupled with it and showing in particular some of the geometrical relations between the parts.

With reference to the accompanying drawings, the numeral 1 denotes a liquid sprayer for treating agricultural crops.

A liquid sprayer 1 for treating agricultural crops normally comprises:
- a liquid tank 2;
- a container 3 for an active principle;
- a mixer 4 which mixes the active principle from the container 3 with the liquid from the tank 2;
- means 5 for pumping the liquid from the tank 2 and suction means 6 for extracting the active principle from the container 3;
- at least one nozzle 7 for distributing the liquid;
- a liquid feed line 8 extending at least between the mixer 4 and the nozzle 7 and comprising a section 80 connecting the container 3 to the mixer 4.

Characteristically, the sprayer according to the invention comprises the following, in combination:
- a plurality of active principle containers 3 and a plurality of respective mixers 4, each mixer 4 mixing the active principle extracted from the respective container 3 with the liquid from the tank 2;
- a plurality of liquid feed lines 8 independent of one another, each feed line 8 extending at least between a respective mixer 4 and at least one respective nozzle 7 and comprising a section 80 connecting the mixer 4 to the respective container 3;
- a suction unit 9 for taking in atmospheric air and a related member 10 for distributing the air taken in, the distribution member 10 being provided with a plurality of air distribution heads 100 located at different positions and grouped together in distribution head assemblies 11, each head assembly 11 comprising at least one distribution head 100.

The at least one nozzle 7 of each independent feed line 8 is coupled with a respective air distribution head 100. Two different feed lines 8 correspond to two different assemblies 11 of air distribution heads 100. Each air distribution head 100 is coupled with at least one nozzle 7.

Thus, each independent feed line 8, connected to different assemblies 11 of distribution heads 100, may be used to treat different parts of the crop (for example, different parts of a plant, such as a grapevine, at different heights or at different positions) according to the position and structure of the distribution head 100 assemblies 11.

Further, thanks to the plurality of mixers 4 and containers 3, the treatment of each part of the crop may also be diversified by type of active principle. If the active principle in the containers 3 is the same, the structure of the sprayer 1 is such that similar treatments can be applied simultaneously under different spraying conditions, optimized according to the part of the crop treated by each different distribution head 100 assembly 11. If the containers 3 contain different active principles, on the other hand, the structure of the sprayer 1 will enable different treatments to be applied to different parts of the crop.

Thus, in a single pass of the tractor carrying or drawing the sprayer 1, the fruit on a tree or the grapes on a vine can be treated with a different active principle and/or different spraying conditions from the leaves and/or trunks of the crop plants being treated.

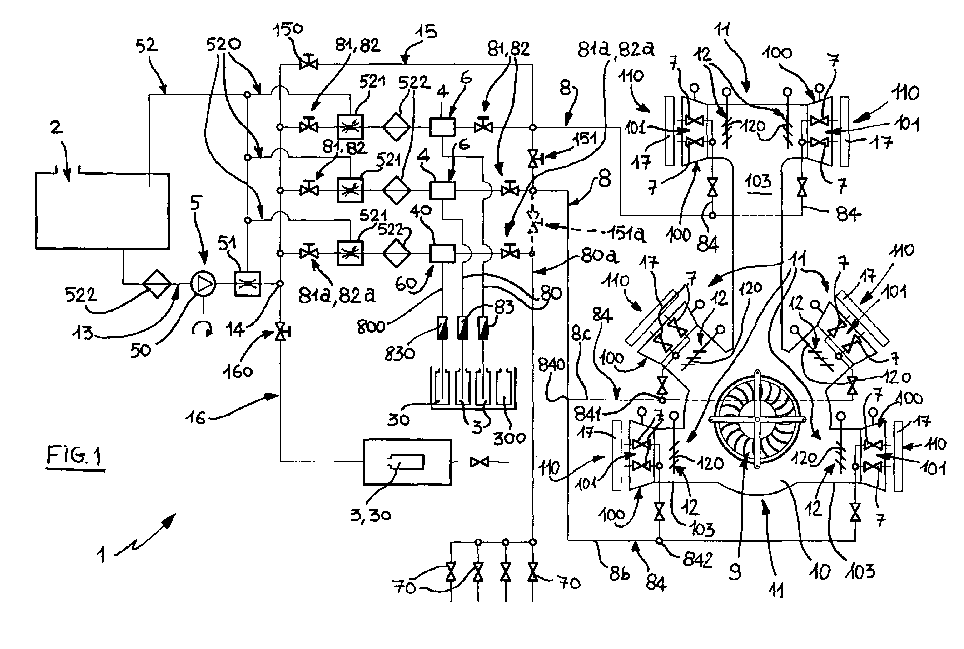

Figure 1 shows two independent feed lines 8, but it will be understood that the number of feed lines and the corresponding number of head 100 assemblies 11) may be higher, according to user requirements and the size of the sprayer 1.

Different head 100 assemblies 11 may correspond to different numbers of distribution heads 100 located at different positions, according to requirements. In the accompanying drawings, the groupings of the distribution head 100 in respective assemblies 11 and the number of distribution heads 100 in each assembly 11 are illustrated purely by way of example.

When an assembly 11 of air distribution heads 100 comprises more than one head 100, the respective feed line 8 comprises at least one nozzle 7 for each head 100.

Each distribution head 100 is preferably coupled with a plurality of nozzles 7. In general, there are two to four nozzles 7 for each air distribution head 100. A higher number of nozzles 7 for each distribution head 100 is, however, also imaginable. Advantageously, the sprayer 1 may comprise:
- an additional container 30 of active principle;
- an additional mixer 40 for mixing the active principle extracted from the additional container 30 with the liquid from the tank 2;
- additional suction means 60 for extracting the active principle from the additional container 30;
- an additional, independent liquid feed line 80a extending at least between the additional mixer 40 and at least one additional nozzle 70 and comprising an additional section 800 connecting the additional container 30 to the additional mixer 40, the at least one additional nozzle 70 facing downwards in order to spray the soil.

The additional feed line 80a is not associated with any air distribution system. It is used to spray the soil with a jet of liquid such as, for example, a weedkiller, while the rest of the sprayer 1 treats one or more crop rows.

Obviously, the additional container 30, the additional mixer 40, the additional nozzles 70 and the additional feed line 80a are otherwise identical to those of the feed lines 8 coupled with the air distribution head 100 assemblies 11.

Therefore, any description of the feed lines 8 without reference to air emission from the distribution heads 100 also applies to the additional feed line 80a and its components. Obviously, the additional feed line 80a may also comprise a plurality of additional nozzles 70. The provision, where necessary, of more than one additional feed line 80a is also contemplated.

The liquid inside the tank 2 is a carrier for the active principle or active principles of the containers 3, 30. It is normally water but any other suitable liquid might be used.

The means 5 for pumping the liquid comprise a pump 50. As is normally the case, a pressure relief regulator 51 associated with a circuit 52 for recirculating the liquid in the tank may be provided.

The recirculating circuit 52 may comprise a branch 520 for each independent feed line 8, 80a, the branch 520 connecting up with the feed line 8, 80a upstream of the respective mixer 4, 40 in the direction of liquid flow towards the nozzles 7, 70. Each branch 520 may flow into a respective pressure relief regulator 521 located on the feed line 8, 80a.

The means 5 for pumping the liquid from the tank 2 are located between the tank 2 and the mixers 4, 40.

Filters 522 may be provided at various points in the system to eliminate impurities and solid particles that might prevent the sprayer 1 from working properly.

Each feed line 8 comprises means 81 for shutting off and/or means 82 for regulating the flow of the liquid in the feed line 8. These shutoff means 81 and/or regulator means 82 are located between the mixer 4 related to the feed line 8 itself and the liquid tank 2 and/or between the mixer 4 and the at least one nozzle 7 serving the air distribution head 100 assembly 11 corresponding to the feed line 8.

The means 81 for shutting off and/or the means 82 for regulating the liquid flow in the respective feed line 8 may be integrated with each other and/or power-driven and may, for example, be embodied in adjustable gate valves or taps.

Each additional feed line 80a comprises means 81a for shutting off and/or means 82a for regulating the flow of the liquid in the additional feed line 80a. These additional shutoff means 81a and/or regulator means 82a are located between the additional mixer 40 related to the feed line 80a itself and the liquid tank 2 and/or between the additional mixer 40 and the additional nozzles 70.

The additional means 81a for shutting off and/or the means 82a for regulating the liquid flow in the respective additional feed line 80a may be integrated with each other and/or power-driven and may, for example, be embodied in adjustable gate valves or taps.

The sprayer 1 comprises means for regulating the pressure and/or the flow of the liquid in each feed line 8, 80a.

The possibility of selectively shutting off one or more feed lines 8, 80a makes it possible to avoid spraying surrounding areas that do not need to be sprayed (for example when working on the edge of a field where the crop is located on one side of the sprayer 1 only). The possibility of regulating the flow and/or the pressure of the liquid makes it possible to optimize the quantity of product applied to the parts of the crop to be sprayed using the feed line 8, 80a. This possibility, combined with the possibility of regulating the air flow, as described below, further enhances treatment efficiency and selectiveness, reducing indiscriminate contamination of the environment.

Each feed line 8, 80a comprises a liquid flow sensor 83, 830 located in the section 80, 800 connecting the mixer 4, 40 of the respective feed line 8, 80a to the corresponding container 3, 30. The flow sensor 83, 830, sends a signal indicating that there is no more active principle in the container 3, 30 directly to the user or to a control unit described in more detail below.

The independent feed lines 8, 80a are advantageously derived in parallel with each other from a single common section 13 which connects the liquid tank 2 to a fork 14, the mixers 4, 40 remaining between the fork 14 and the at least one nozzle 7, 70, and the means 5 for pumping the liquid out of the tank 2 being located on the single, common section 13.

This is very important because it means only one pumping means 5 (in particular, a single pump 50) is needed for all the independent feed lines 8, 80a. This allows considerable savings in components and facilitates the adaptation of existing sprayers to the structure required by the invention.

Further, the modularity of the structure is extremely advantageous because it enables a sprayer to be adapted and upgraded at any later stage without significantly altering its structure.

Advantageously, the sprayer 1 comprises a by-pass line 15 directly connecting the liquid tank 2 to at least one of the independent feed lines 8, 80a in a section of the latter located between the mixer 4, 40 and the at least one nozzle 7, 70 of the feed line 8, 80a itself, in order to cut off the mixer 4, 40 and feed the at least one nozzle 7, 70 directly with the liquid from the tank 2 but without the active principle from the container 3, 30.

The by-pass line 15 can be cut off from the system using a gate valve 150 (which might also be adjustable and used to regulate the flow of liquid in the by-pass line 15). The by-pass line 15 is connected up in the feed lines 8, 80a downstream of the means 81, 81a for shutting off and/or the means 82, 82a for regulating the flow in the feed line 8, 80a itself. All the independent feed lines 8, 80a may be connected to the by-pass line 15, with the possibility of selectively connecting only some of the feed lines 8, 80a directly to the tank 2 without passing through the mixer 4, 40, in particular by means of gate valves 151, 151a.

The by-pass line 15 enables the sprayer 1 to be used as a traditional sprayer, where the liquid in the tank 2 contains an active principle.

Since the part of the system comprising the tank 2 and the pumping means 5 is all upstream of the mixers 4, 40 in the direction of liquid flow towards the nozzles 7, 70, it is not contaminated by the active principle from the containers 3, 30, with obvious advantages when it comes to cleaning and sanitizing the system after a treatment.

Advantageously, the containers 3, 30 of the active principle are removable. When the containers 3, 30 are empty, therefore, they can be changed quickly and easily.

The containers 3, 30 of the active principle can also be substituted with water containers 300 for cleaning the feed lines from the container 3, 30 to the at least one nozzle 7, 70, enabling the mixer 4, 40 to be cleaned too.

The sprayer 1 also comprises a line 16 for cleaning the empty containers 3, 30, connected directly to the tank 2 and able to be cut off, for example by a respective gate valve 160, from the action of the means 5 that pump the liquid out of the tank.

The mixer 4, 40 comprises a metering device (not illustrated) for dispensing the active principle in proportion to the liquid. The metering device is adjustable. Advantageously, the mixer 4, 40 and the metering device are built into a single metering element 4, 40, which in turn incorporates the suction means 6, 60 for extracting the active principle from the container 3, 30 and which is driven by the motive power provided by the liquid flowing out of the tank 2 under the action of the pumping means 5. A metering unit of this kind is well known and is manufactured by DOSATRON INTERNATIONAL and marketed under the trade name of "DOSATRON"^{®}. It enables the quantity of active principle to be adjusted by simply turning a thumbwheel.

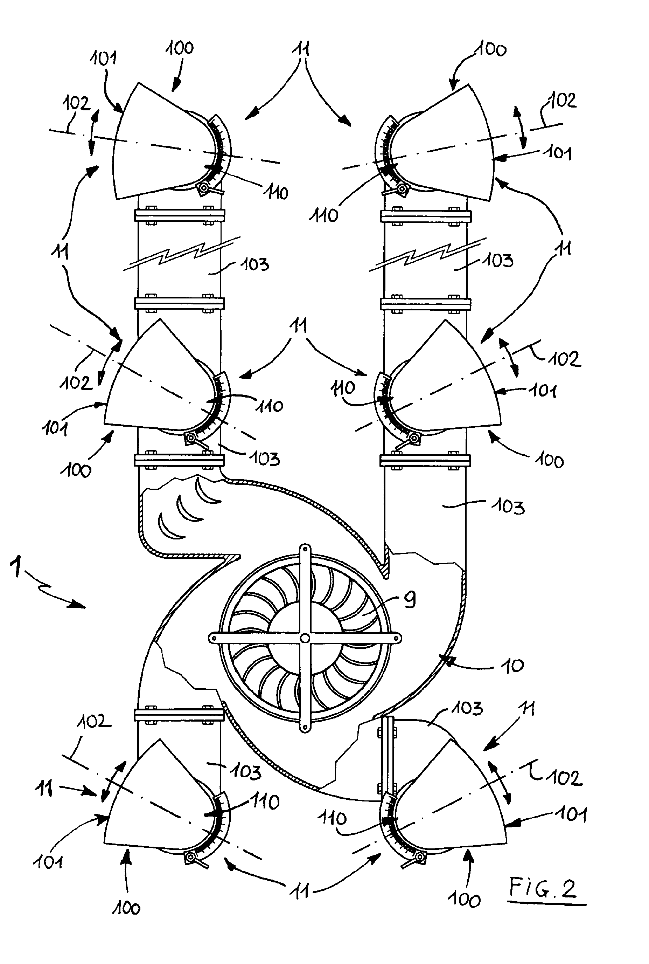

Figure 2 shows two different possibilities of grouping the air distribution heads 100 in assemblies 11 of heads 100. More specifically, in a first possible grouping: the two heads 100 located on the duct 103 on the top left-hand side form a first assembly 11; the two heads 100 located on the duct 103 on the top right-hand side form a second assembly 11; and each of the two heads 100 at the bottom forms a respective third and fourth assembly 11. In a second possible grouping: the two heads located at the top ends of the two ducts 103 on the top right- and left-hand sides form a first assembly 11. The two heads 100 located at the bottom of the two ducts 103 on the top right- and left-hand sides form a second assembly 11; and the two heads 100 at the bottom form a third assembly 11.

Mixed solutions, combining the first and second possible groupings, are also imaginable.

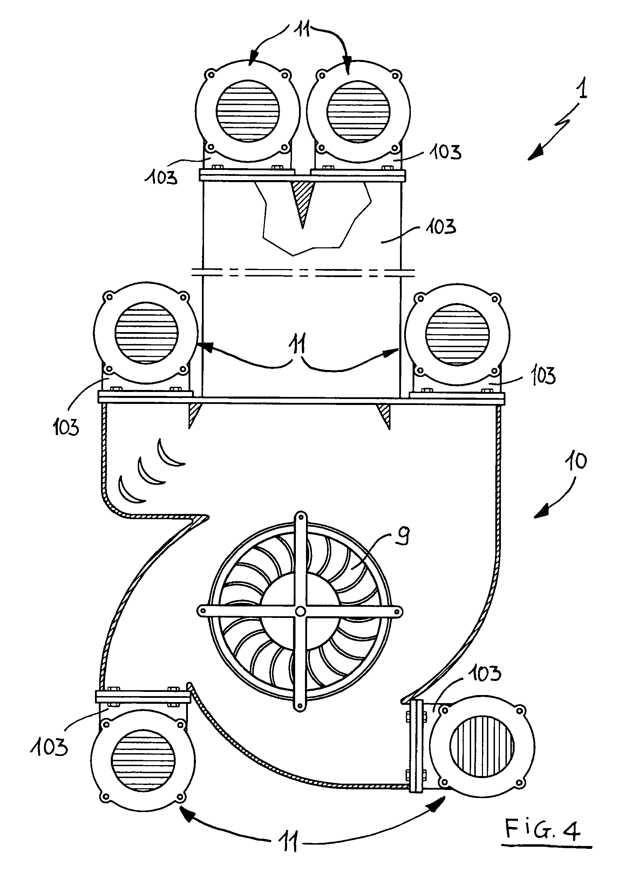

Figures 1 and 4, on the other hand, each show a single, well-defined example of how the air distribution heads 100 can be grouped together into assemblies 11 of heads 100. It will be understood that all the example groupings illustrated are not exhaustive and that other possible distribution head set-ups are possible according to user requirements and types of treatment to be applied simultaneously.

As a general rule, preferably, in the sprayer 1:
- at least one assembly 11 of air distribution heads 100 comprises at least two sub-assemblies 110 of distribution heads 100, each comprising at least one distribution head 100;
- the independent feed line 8 corresponding to the at least one assembly 11 of heads 100 branches out, between the mixer 4 and the at least one nozzle 7, into at least two sub-lines 84 each dedicated to a respective sub-assembly 110 of the at least one assembly 11 of distribution heads 100.

Thus, although a liquid containing the same active principle is sent to all the sub-assemblies 110 of the assembly 11 considered, it is possible to diversify the treatments in terms of spraying conditions in each sub-assembly 110. This is possible, in particular, if each sub-line 84 comprises means for shutting off and/or regulating the liquid flow in the sub-line 84 towards the nozzles 7 of the respective sub-assembly 110 of the air distribution head 100 assembly 11. The means for shutting off and/or regulating the liquid flow in the respective feed sub-line 84 may be integrated with each other and/or power-driven. This is possible even if means are provided for regulating the air flow and/or the pressure, as described below, as an alternative to or in combination with the means for shutting off and/or regulating the liquid flow in the sub-line 84.

Figure 1 shows two assemblies 11 of distribution heads 100: one assembly 11, at the top, is composed of two distribution heads 100 and is served by the uppermost feed line 8 shown in the drawing; the other assembly 11, at the bottom, is composed of four distribution heads 100 (two above and two below) and is served by the lowermost feed line 8 shown in the drawing. The lowermost feed line 8 in the drawing divides at the fork 840 into the two sub-lines 84 illustrated, which respectively serve the sub-assembly 110 formed by the two upper distribution heads 100 of the lowermost assembly 11 in the drawing and the sub-assembly 110 formed by the two lower distribution heads 100 of the lowermost assembly 11 in the drawing.

However, the grouping might have been different. For example, as sub-lines of the line 8 concerned, we might have considered the two sub-branches into which the branches 8b and 8c, starting at the fork 840, are divided at the further forks 841 and 842, and which respectively serve: the two lower heads 100 in Figure 1 and the two intermediate heads 100 in Figure 1. In this case, each distribution head 100 in the lowermost assembly 11 in Figure 1 would be a subassembly 110.

Alternatively, the lowermost feed line 8 in the drawing might not divide at the fork 840 and might continue only along the branch 8c serving the two intermediate distribution heads 100 in Figure 1. The division into sub-lines might, instead, occur at the fork 841 (so that the sub-assemblies 110 would each be formed by one of the two upper distribution heads 100 in the lowermost assembly 11 in Figure 1 and would, in this case, be part of yet another assembly 11 comprising the two heads 100 themselves). In this case, the branch 8b corresponding to the sub-line 84 that serves the two lower heads 100 in Figure 1 might form part of a yet further feed line 8, not shown in the drawing, that would divide at the fork 842 to form two sub-lines, each serving a sub-assembly 110 formed by only one of the two lower heads 100 in Figure 1. The combinations of assemblies 11, heads 100 in an assembly 11 and sub-assemblies in an assembly 11, with the corresponding feed lines 8 and sub-lines 84 may differ according to requirements and the part/parts of the crop to be treated.

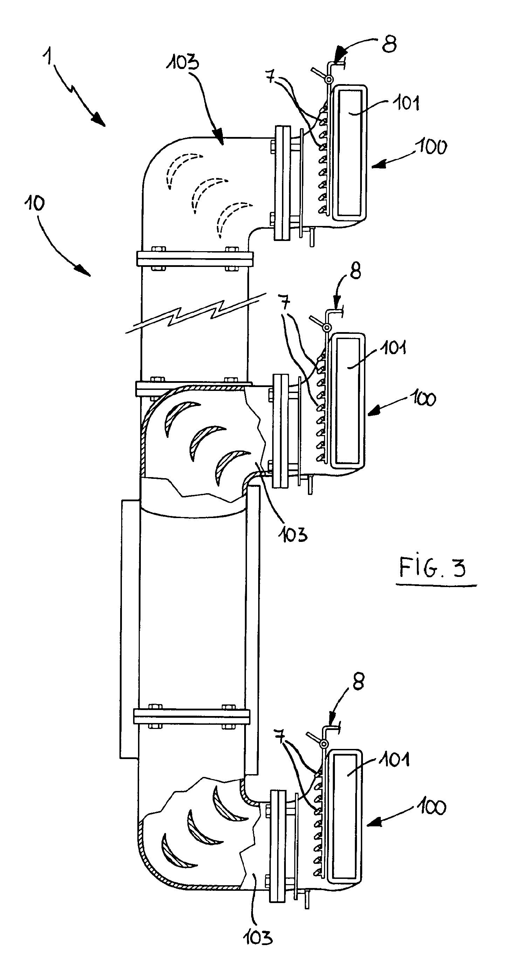

The sprayer 1 according to the invention may comprise at least one pair of assemblies 11 of air distribution heads 100, the two assemblies 11 in the pair being located on opposite sides of the sprayer 1 relative to a direction of movement of the sprayer 1 itself (in Figures 1, 2 and 3, said direction is perpendicular to the drawing plane, or sheet plane). This solution enables different treatments to be applied to the crop simultaneously on opposite sides of the sprayer 1. This specific embodiment is illustrated by the first possibility of Figure 2 (where all the head 100 assemblies 11 are made in this way) or by a combination of the first and second possibilities of Figure 2 (where only one or only two of the pairs of head assemblies 11 are made in this way).

The sprayer 1 according to the invention may comprise at least two air distribution head 100 assemblies 11 located at different heights from the ground. This solution is illustrated in all the drawings in Figures 1, 2 and 3 and enables different treatments to be applied to different parts of the crop at different heights.

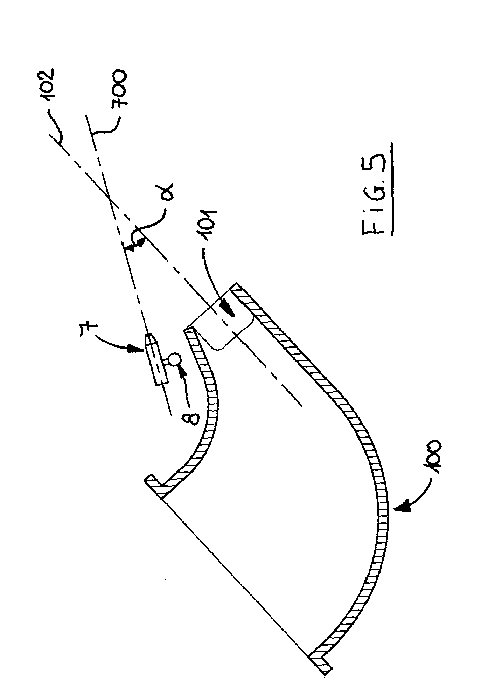

At least one assembly 11 of air distribution heads 100 comprises two sub-assemblies 110 of air distribution heads 100, each comprising at least one distribution head 100 and positioned on the side of the sprayer 1 opposite the other sub- assembly 110 relative to a direction of movement of the sprayer 1 itself (in Figures 1, 2 and 3, said direction is perpendicular to the drawing plane, or sheet plane). This embodiment is illustrated in Figure 1 and in the second possibility of Figure 2. Each air distribution head 100 has an outlet opening 101 which defines a direction 102 in which the air flows out of the distribution head 100 and can be rotationally adjusted in space at least about an axis parallel to a direction of movement of the sprayer 1 itself (in Figures 1, 2, 3 and 5, said direction is perpendicular to the drawing plane, or sheet plane). The sprayer 1 comprises means for driving the adjusting movement of the outlet opening 101.

Advantageously, the nozzles 7 are located outside the respective air distribution heads 100 and in the vicinity of the outlet opening 101. The axis of the nozzles and the direction 102 of air outflow from the outlet opening 101 converge with each other and make a predetermined angle α. The nozzles 7 are integral with the air distribution heads 100 they are coupled with. Means may be provided for adjusting the relative orientation and/or the relative position of the nozzles 7 and of the air distribution heads 100.

The sprayer 1 comprises means 12 for regulating the pressure and/or the flow of the air to the distribution heads 100. The means 12 for regulating the pressure and/or the flow of the air to the distribution heads 100 comprise adjustable gate valves 120 located on a duct 103 for supplying air to the distribution head 100 and/or at an air outlet opening 101 of the distribution head 100, defining a direction 102 in which the air flows out of the distribution head 100 itself. The means 12 for regulating the pressure and/or the flow of the air to the distribution heads 100 may be power-driven and, preferably, also remotely controlled.

The action of the means for regulating air pressure and/or flow also permits optimization of the effect of the treatment on the crop, especially if combined with the means (described above) for regulating the flow and/or pressure of the liquid in the feed lines 8.

At least one of the air distribution heads 100 is provided with an electronic device 17 for generating an electrostatic field between the water particles created by the combined action of the liquid flowing out of the at least one nozzle 7 and of the air flowing out of the at least one air distribution head 100, and the soil and/or the crop to be sprayed, thus statically charging the water particles so they are attracted to the crop sprayed. Advantageously, a plurality of distribution heads 100 (or even all the heads 100) are provided with electronic devices 17.

The electrostatic field generated by the electronic device 17 is adjustable.

The electronic device 17 is similar to the devices used for painting metal parts. One electrode is placed at the air outlet opening 101 of one distribution head 100 while the other electrode is earthed to the soil (for example, using a metal cable hanging from the tractor and sliding along the surface of the soil).

Advantageously, the sprayer 1 comprises an electronic unit for controlling its different functions and equipped with a control panel accessible by the user. The control panel may be located, for example, in the cab of the tractor which mounts or draws the sprayer 1. The control unit runs a program which, according to parameters and/or commands set by the user on the control panel, sets and controls the settable and adjustable functions of the sprayer (being, for example, connected by connecting and/or control and/or detection means to one or more - or even all - the adjustable and/or power-driven parts of the sprayer 1 described above), the adjustment and drive functions being controlled by the electronic unit.

According to parameters set by the user on the control panel, the electronic control unit runs a spraying program based on a predetermined protocol (for example a safety protocol).

The invention has important advantages.

First of all, it enables multiple treatments to be applied simultaneously, even with different substances, to different parts of the crop at different positions or at different heights. The invention also reduces pollution by increasing the percentage of sprayed product that settles on the plant (without dripping) compared to that which is dispersed in the atmosphere or in the soil. This is accomplished by the modular structure of the sprayer. The effect is enhanced also by: the possibility of directing the jet of air at the parts to be treated; the possibility of adjusting air flow speed and liquid pressure according to the results to be achieved and environmental conditions (spraying both sides of the leaves, wetting the fruit and/or the trunk, etc.); the possibility of statically charging the particles of sprayed product to a controlled extent in such a way that they are attracted to the parts of the plants to be treated.

Advantageously, the invention allows considerable savings in products/active principles. That is because the means by which pollution is reduced also lead to savings in products. Savings are also achieved by the use of two or more mixing/metering devices located, in the direction of liquid flow towards the nozzles, downstream of the means that pump the liquid out of the tank, said mixing/metering devices extracting the active principle directly from its container (undiluted). This minimizes the quantity of waste remaining after treatment. The active principles that remain in the containers are not diluted and can therefore be re-used. Washing of the system is normally limited to the mixing/metering devices and nozzles since the tank contains water only.

A great deal of time is also saved. There is no need to mix the active principle and the liquid beforehand. Different treatments can be applied simultaneously to different parts of the crop and even to the soil. The possibility of aiming and adjusting the air jets that carry the different products distributed by the independent feed lines from the mixing/metering devices located downstream of the means that pump the liquid from the tank in the direction of liquid flow towards the nozzles makes it possible to spray two or more products simultaneously and, therefore, to apply two or more treatments in a single pass of the tractor: for example, in a vineyard, it is possible to simultaneously treat the leaves, the grapes and to weed the soil. Cleaning time is significantly reduced since it is sufficient to substitute the containers of active principle with containers full of water and to run the machine for a short time.

Another major advantage is that of greatly reducing the number of occasions the operator comes into contact with the active principle, because: liquid products that can be siphoned directly out of their original containers can be used; there is no need to prepare the treatment mixtures beforehand and cleaning operations are greatly reduced; the machine is controlled largely from the tractor driver's cab.

Another no less important advantage is the flexibility of the sprayer according to the invention. The devices it is equipped with are modular, which means that its capabilities can be adapted and extended at any stage. The by-pass line enables the sprayer to be used in the traditional manner. A traditional sprayer can easily be adapted and modified according to the inventive concept. The original tank can be used as the tank of the sprayer according to the invention, and the original pump as the means for pumping the liquid. All that is necessary is to substitute the traditional feed line with the plurality of feed lines according to the invention (equipped with respective mixing/metering devices) and, if necessary, to modify the air distribution member which must have different distribution head assemblies suitably arranged and associated with respective feed lines in order to correctly direct the air (and hence the flow of liquid particles) to the target parts of the crop plants to be treated. It is also possible to add all the automatic drive and adjustment apparatus required and to connect such apparatus to a suitable control unit and cab- mounted control panel.

A further important advantage lies in the fact that the possibility of optimizing working conditions and/or precisely controlling operating parameters enables lower pressure to be used (in both the liquid and air circuits), thus requiring less motive power. That means smaller tractors can be used, with obvious advantages in terms of energy saving and possibility of using the sprayer in confined spaces.

It will be understood that the invention can be modified and adapted in several ways without thereby departing from the scope of the inventive concept.

Moreover, all the details of the invention may be substituted by technically equivalent elements.

In practice, the embodiments of the invention may be made from any material, and in any shape and size, depending on requirements.

## Claims

1. A liquid sprayer for treating agricultural crops, of the type comprising:
- a liquid tank (2);
- a container (3) for an active principle;
- a mixer (4) which mixes the active principle from the container (3) with the liquid from the tank (2);
- means (5) for pumping the liquid from the tank (2) and suction means (6) for extracting the active principle from the container (3);
- at least one nozzle (7) for distributing the liquid;
- a liquid feed line (8) extending at least between the mixer (4) and the at least one nozzle (7) and comprising a section (80) connecting the container (3) to the mixer (4);
**characterized in that** it comprises the following, in combination:
- a plurality of active principle containers (3) and a plurality of respective mixers (4), each mixer (4) mixing the active principle extracted from the respective container (3) with the liquid from the tank (2) ;
- a plurality of liquid feed lines (8), independent of one another, each feed line (8) extending at least between a respective mixer (4) and at least one respective nozzle (7) and comprising a section (80) connecting the mixer (4) to the respective container (3);
- a suction unit (9) for taking in atmospheric air and a related member (10) for distributing the air taken in, the distribution member (10) being provided with a plurality of air distribution heads (100) located at different positions and grouped together in distribution head assemblies (11), each head assembly (11) comprising at least one distribution head (100);
- the at least one nozzle (7) of each independent feed line (8) being coupled with a respective air distribution head (100);
- two different feed lines (8) corresponding to two different assemblies (11) of air distribution heads (100) and each air distribution head (100) being coupled with at least one nozzle (7).

2. The sprayer according to claim 1, **characterized in that** it comprises at least one pair of assemblies (11) of air distribution heads (100), the two assemblies (11) in the pair being located on opposite sides of the sprayer (1) relative to a direction of movement of the sprayer (1) itself.

3. The sprayer according to claim 1 or 2, **characterized in that** it comprises at least two distribution head (100) assemblies (11) located at different heights from the ground.

4. The sprayer according to claim 3, **characterized in that** at least one assembly (11) of air distribution heads (100) comprises two sub-assemblies (110) of air distribution heads (100), each comprising at least one distribution head (100) and being positioned on the side of the sprayer (1) opposite the other sub-assembly (110) relative to a direction of movement of the sprayer (1) itself.

5. The sprayer according to any of the foregoing claims, **characterized in that** each distribution head (100) is coupled with a plurality of nozzles (7).

6. The sprayer according to any of the foregoing claims, **characterized in that** each air distribution head (100) has an outlet opening (101) which defines a direction (102) in which the air flows out of the distribution head (100) and can be rotationally adjusted in space at least about an axis parallel to a direction of movement of the sprayer (1) itself.

7. The sprayer according to any of the foregoing claims, **characterized in that** it comprises means (12) for regulating the pressure and/or the flow of the air to the distribution heads (100).

8. The sprayer according to claim 7, **characterized in that** the means (12) for regulating the pressure and/or the flow of the air to the distribution heads (100) comprise adjustable gate valves (120) located on a duct (103) for supplying air to the distribution head (100) and/or at an air outlet opening (101) of the distribution head (100), defining a direction (102) in which the air flows out of the distribution head (100) itself.

9. The sprayer according to any of the foregoing claims, **characterized in that** each feed line (8) comprises means (81) for shutting off and/or means (82) for regulating the flow of the liquid in the feed line (8).

10. The sprayer according to any of the foregoing claims, **characterized in that** it comprises means for regulating the pressure and/or the flow of the liquid in each feed line (8).

11. The sprayer according to any of the foregoing claims, **characterized in that** each feed line (8) comprises a liquid flow sensor (83) located in the section (80) connecting the mixer (4) of the feed line (8) to the respective container (3).

12. The sprayer according to any of the foregoing claims, **characterized in that** the independent feed lines (8) are derived in parallel with each other from a single common section (13) which connects the liquid tank (2) to a fork (14), the mixers (4) remaining between the fork (14) and the at least one nozzle (7), and the means (5) for pumping the liquid out of the tank (2) being located on the single, common section (13).

13. The sprayer according to any of the foregoing claims, **characterized in that**:
- at least one assembly (11) of air distribution heads (100) comprises at least two sub-assemblies (110) of distribution heads (100), each comprising at least one distribution head (100);
- the independent feed line (8) corresponding to the at least one assembly (11) of heads (100) branches out, between the mixer 4 and the at least one nozzle (7), into at least two sub-lines (84) each dedicated to a respective sub-assembly (110) of the at least one assembly (11) of distribution heads (100).

14. The sprayer according to claim 13, **characterized in that** each sub-line (84) comprises means for shutting off and/or regulating the liquid flow in the sub-line (84) towards the nozzles (7) of the respective sub-assembly (110) of the air distribution head (100) assembly (11).

15. The sprayer according to any of the foregoing claims, **characterized in that** it comprises:
- an additional container (30) of active principle;
- an additional mixer (40) for mixing the active principle extracted from the additional container (30) with the liquid from the tank (2);
- additional suction means (60) for extracting the active principle from the additional container (30);
- an additional, independent liquid feed line (80a) extending at least between the additional mixer (40) and at least one additional nozzle (70) and comprising an additional section (800) connecting the additional container (30) to the additional mixer (40), the at least one additional nozzle (70) facing downwards in order to spray the soil.

16. The sprayer according to any of the foregoing claims, **characterized in that** it comprises a by-pass line (15) directly connecting the liquid tank (2) to at least one of the independent feed lines (8, 80a) in a section of the latter located between the mixer (4, 40) and the at least one nozzle (7, 70) of the feed line (8, 80a) itself, in order to cut off the mixer (4, 40) and feed the at least one nozzle (7, 70) directly with the liquid from the tank (2) but without the active principle from the container (3, 30).

17. The sprayer according to any of the foregoing claims, **characterised in that** the containers (3, 30) of the active principle are removable.

18. The sprayer according to claim 17, **characterized in that** it comprises a line (16) for cleaning the empty containers (3, 30), connected directly to the liquid tank (2) and able to be cut off from the action of the means (5) that pump the liquid out of the tank.

19. The sprayer according to any of the foregoing claims, **characterized in that** the means (5) for pumping the liquid from the tank (2) are located between the tank (2) and the mixers (4, 40).

20. The sprayer according to any of the foregoing claims, **characterised in that** the mixer (4, 40) comprises a metering device for dispensing the active principle in proportion to the liquid.

21. The sprayer according to claim 20, **characterized in that** the metering device is adjustable.

22. The sprayer according to claim 20 or 21, **characterized in that** the mixer and the metering device are built into a single metering element (4, 40), which in turn incorporates the suction means (6, 60) for extracting the active principle from the container (3, 30) and which is driven by the motive power provided by the liquid flowing out of the tank (2) under the action of the pumping means (5).

23. The sprayer according to any of the foregoing claims, **characterized in that** at least one of the air distribution heads (100) is provided with an electronic device 17 for generating an electrostatic field between the water particles created by the combined action of the liquid flowing out of the at least one nozzle (7) and of the air flowing out of the at least one air distribution head (100), and the soil and/or the crop to be sprayed, thus statically charging the water particles so they are attracted to the crop sprayed.

24. The sprayer according to claim 23, **characterized in that** the electrostatic field generated by the electronic device (17) is adjustable.

25. The sprayer according to any of the foregoing claims, **characterized in that** it comprises an electronic unit for controlling the different sprayer functions and equipped with a control panel accessible by the user.

26. The sprayer according to claim 25, **characterized in that** the control unit runs a program which, according to parameters and/or commands set by the user on the control panel, sets and controls the settable and adjustable functions of the sprayer.

27. The sprayer according to claim 25 or 26, **characterized in that** according to parameters set by the user on the control panel, the electronic control unit runs a spraying program based on a predetermined protocol.
